# EUROPÄISCHE PATENTANMELDUNG

(11) **EP 2 421 125 A2**
(43) Veröffentlichungstag der Anmeldung: **22.02.2012**
(21) Anmeldenummer: 11166158.3
(22) Anmeldetag: 16.05.2011
(51) Int. Cl.: H02K 5/20, H02K 9/19

(54) **Antriebssystem für ein Kraftfahrzeug**

(30) Priorität: 16.07.2010 DE 102010031490
(71) Anmelder: Robert Bosch GmbH, 70442 Stuttgart (DE)
(72) Erfinder: Martin, Norbert, 77855, Achern (DE)

(57) **Zusammenfassung**

Die Erfindung betrifft eine Antriebseinheit (2) für ein Antriebssystem (1) eines Kraftfahrzeugs, umfassend:
- ein Gehäuse (21) zur Aufnahme von mehreren, insbesondere zwei Antriebsmotoren (22);
- zwei an gegenüber liegenden Seiten des Gehäuses (21) vorgesehene Kopplungswellen (3), die koaxial zueinander angeordnet sind; und
- eine Steuereinheit (33) zum Ansteuern der Antriebsmotoren (22), die an einer Außenseite des Gehäuses (21) angeordnet ist.

Die Erfindung betrifft weiterhin ein Antriebssystem (1) für ein Kraftfahrzeug, umfassend:
- mehrere an einer Achse angeordnete Antriebsräder (4);
- eine Antriebseinheit (2) nach einem der vorangehenden Ansprüche;
- Kopplungswellen (3) zum Verbinden der Antriebseinheit (2) mit den mehreren Antriebsrädern (4).

## Beschreibung

### Technisches Gebiet

Die vorliegende Erfindung betrifft Antriebssysteme für Kraftfahrzeuge, insbesondere Antriebssysteme, bei denen jedes Antriebsrad von einem separaten Antriebsmotor angetrieben wird.

### Stand der Technik

Der derzeitige Stand der Entwicklung elektrischer Fahrmotoren für Kraftfahrzeuge orientiert sich am konventionellen Aufbau verbrennungsmotorgetriebener Fahrzeuge. Bei diesen treibt ein zentral angeordneter elektrischer Antriebsmotor über ein Differentialgetriebe und Längs- bzw. Seitenwellen die Antriebsräder des Kraftfahrzeugs an.

Alternativ dazu werden Radnabenantriebe diskutiert, bei denen Antriebsräder des Kraftfahrzeugs jeweils von einzelnen elektrischen Antriebsmotoren angetrieben werden. Diese einzelnen Antriebsmotoren weisen einen redundanten Aufbau auf und bringen aufgrund ihrer verteilten Anordnung einen erhöhten Verkabelungsaufwand mit sich. Die Verkabelung dient dazu, die elektrische Energie auf die Antriebseinheiten zu verteilen und muss für hohe Spannungen von beispielsweise 400 VDC und hohe Stromstärken ausgelegt sein. Insbesondere wird die Verkabelung dadurch aufwändig, dass bei einer Beschädigung, beispielsweise im Falle eines Unfalls, keine Gefährdung durch die elektrische Spannung auftreten soll.

Weiterhin sind die elektrischen Antriebsmotoren der Antriebseinheiten sowie die dazu erforderliche Leistungselektronik auf eine Kühlung angewiesen, die in der Regel in Form einer Wassermantelkühlung ausgestaltet wird. Da diese für jeden Antriebsmotor separat vorgesehen werden muss, ist der Aufwand für Radnabenantriebe gegenüber einem zentralen Antrieb deutlich erhöht.

Weiterhin ist zusätzlicher konstruktiver Aufwand notwendig, da die Antriebseinheit in der Radnabe in der Regel direkt mit dem Antriebsrad gekoppelt ist, so dass Stöße und Schwingungen des Rads unmittelbar auf die Antriebseinheit übertragen werden und hohe mechanische Belastungen auf die Antriebseinheit ausüben können. Zudem ist bei den meisten Konzepten eine Neu- bzw. Umentwicklung der mechanischen Fahrzeugbremse erforderlich.

Es ist daher Aufgabe der vorliegenden Erfindung, ein verbessertes Antriebssystem für ein Kraftfahrzeug mit einer oder mehreren Antriebseinheiten bereitzustellen, das die Nachteile des Stands der Technik vermeidet und insbesondere die Vorteile von radnahen Antriebseinheiten mit einem effizienten Aufbau der Leistungselektronik, einem möglichst hohen Anteil an gemeinsam genutzten Komponenten sowie einem minimalen Aufwand für die Verkabelung des Gesamtsystems und für die Kühlung kombiniert.

### Offenbarung der Erfindung

Diese Aufgaben werden durch die Antriebseinheit für ein Kraftfahrzeug gemäß Anspruch 1 sowie durch das Antriebssystem gemäß dem nebengeordneten Anspruch gelöst.

Weitere vorteilhafte Ausgestaltungen sind in den abhängigen Ansprüchen angegeben.

Gemäß einem ersten Aspekt ist eine Antriebseinheit für ein Antriebssystem eines Kraftfahrzeugs vorgesehen. Die Antriebseinheit umfasst:
- ein Gehäuse zur Aufnahme von mehreren, insbesondere zwei Antriebsmotoren;
- zwei an gegenüber liegenden Seiten des Gehäuses vorgesehene Kopplungswellen, die koaxial zueinander angeordnet sind; und
- eine Steuereinheit zum Ansteuern der Antriebsmotoren, die an einer Außenseite des Gehäuses angeordnet ist.

Gemäß einem weiteren Aspekt ist ein Antriebssystem für ein Kraftfahrzeug vorgesehen. Das Antriebssystem umfasst:
- mehrere an einer Achse angeordnete Antriebsräder;
- die obige Antriebseinheit; und
- Kopplungswellen zum Verbinden der Antriebseinheit mit den mehreren Antriebsrädern.

Eine Idee des obigen Antriebssystems besteht darin, eine Antriebseinheit für an einer Achse angeordnete Räder in einem einzigen Gehäuse möglichst zwischen den Antriebsrädern vorzusehen, wobei zwei Antriebseinheiten in einem einzigen Gehäuse kombiniert werden. Dadurch ist es möglich, die Antriebsmotoren mit einer gemeinsamen Steuereinheit zu betreiben und aufgrund des gemeinsamen Gehäuses nur einmalig Maßnahmen zur Kühlung des gesamten Antriebssystems vorzusehen. Weiterhin kann der Verkabelungsaufwand reduziert werden, da zu der Antriebseinheit nur eine Zuleitung benötigt wird, obwohl mehrere den Antriebsrädern zugeordnete Elektromotoren dort vorgesehen sind. Insbesondere ist die Antriebseinheit so ausgebildet, dass sie zwei einander gegenüber liegende Abtriebswellen für die entsprechenden Antriebsräder aufweist.

Gemäß einer Ausführungsform kann das Gehäuse zumindest bereichsweise mit einem oder mehreren Kühlmittelkanälen zum Transport eines Kühlmittels versehen sein, wozu insbesondere das Gehäuse bereichsweise doppelwandig ausgeführt ist.

Es kann ein weiterer Kühlmittelkanal zwischen der Steuereinheit und dem Gehäuse angeordnet sein.

Weiterhin kann das Gehäuse zylindrisch ausgebildet sein und Abtriebswellen der Antriebsmotoren können koaxial zu den Kopplungswellen und weiterhin koaxial oder parallel zur Achsrichtung des zylindrischen Gehäuses ausgerichtet sein. Gemäß einer weiteren Ausführungsform kann zwischen den Antriebsmotoren eine Leiterplatte zur Zuführung elektrischer Energie zu Wicklungen, insbesondere zu Statorwicklungen des Antriebsmotors, angeordnet sein.

Die Leiterplatte kann zwei Positionsdetektoren aufweisen, die einander gegenüber liegend auf zwei Seiten der Leiterplatte zwischen einander zugewandten Enden der Abtriebswellen angeordnet sind.

Des Weiteren kann jedem Antriebsmotor ein Getriebe, insbesondere ein Planetengetriebe, zugeordnet sein, das jeweils an einem der Leiterplatte gegenüber liegenden Ende der Abtriebswelle angeordnet ist.

Gemäß einer weiteren Ausführungsform kann das Gehäuse zwei zylindrische Teilgehäuse aufweisen, die jeweils in einem Bereich ihrer Mantelflächen miteinander verbunden sind, wobei Abtriebswellen der Antriebsmotoren parallel zur Achsrichtung der zylindrischen Gehäuse ausgerichtet sind.

Insbesondere kann jedem Antriebsmotor ein Getriebe, insbesondere ein Planetengetriebe, zugeordnet sein, das jeweils an einem Stirnende des entsprechenden Teilgehäuses angeordnet ist.

Weiterhin kann jedem Antriebsmotor ein Positionsdetektor zugeordnet sein, der an einem dem Getriebe gegenüber liegenden Ende der entsprechenden Abtriebswelle angeordnet ist.

Gemäß einer weiteren Ausführungsform des Antriebssystems kann die Antriebseinheit mittig zwischen den Antriebsrädern angeordnet sein.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Kraftfahrzeugs in einer Draufsicht;
- Figur 2: eine Schnittansicht durch eine Antriebseinheit gemäß einer Ausführungsform in einer Schnittebene parallel zur Achsrichtung;
- Figur 3: eine Schnittansicht durch die Antriebseinheit der Figur 2 in einer Schnittebene senkrecht zur Achsrichtung;
- Figur 4: eine Schnittansicht durch eine Antriebseinheit gemäß einer weiteren Ausführungsform entlang einer Schnittebene parallel zu einer Achsrichtung; und
- Figur 5: eine Schnittansicht durch die Antriebseinheit gemäß Figur 4 in einer Schnittebene senkrecht zur Achsrichtung.

### Beschreibung von Ausführungsformen

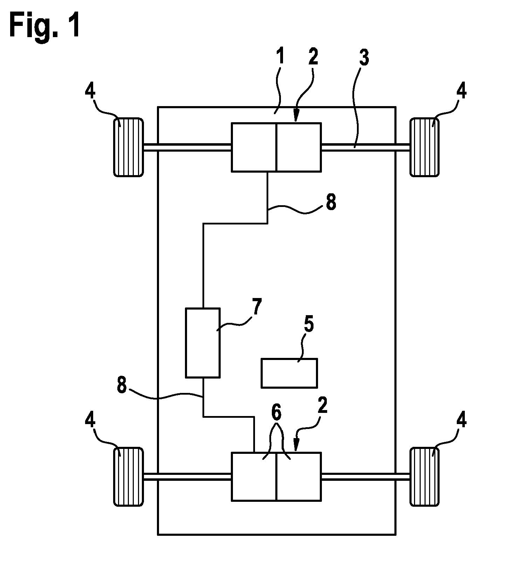

In Figur 1 ist eine schematische Draufsicht auf ein Antriebssystem 1 eines Kraftfahrzeugs mit vier Antriebsrädern 4 dargestellt. Die Anzahl der Antriebsräder 4 des Kraftfahrzeugs ist im Wesentlichen beliebig. Im vorliegenden Beispiel sind zwei Antriebseinheiten 2 jeweils auf der Achse zwischen jeweils zwei Antriebsrädern 4 angeordnet, wobei die jeweilige Antriebseinheit 2 über Kopplungswellen 3 mit den Antriebsrädern 4 verbunden ist. Gemäß den nachfolgend beschriebenen Ausführungsformen werden die Antriebsräder 4 paarweise durch jeweils eine Antriebseinheit 2 angetrieben.

Die Antriebseinheiten 2 werden von einem zentralen Steuergerät 5 angesteuert, um jeweils eine bestimmte Antriebsleistung für jedes der mit der jeweiligen Antriebseinheit 2 gekoppelten Antriebsräder 4 bereitzustellen. Die Vorgabe des zentralen Steuergeräts 5 umfasst beispielsweise eine Angabe über ein bereitzustellendes Antriebsmoment.

Weiterhin weisen die Antriebseinheiten 2 jeweils zwei Motoreinheiten 6 auf, die einen Elektromotor umfassen, der über eine elektrische Energiequelle 7, wie beispielsweise eine Batterie oder Brennstoffzelle, mit elektrischer Energie versorgt wird. Zum Bereitstellen der elektrischen Energie werden an die Antriebseinheiten beispielsweise elektrische Spannungen von bis zu 450 V Gleichstrom geführt, so dass eine entsprechende Versorgungsleitung 8 zwischen der Energiequelle 7 und der jeweiligen Antriebseinheit 2 mit Sicherheitseinrichtungen vorgesehen sein muss, um eine Gefährdung von Personen, beispielsweise im Falle eines Unfalls, zu vermeiden.

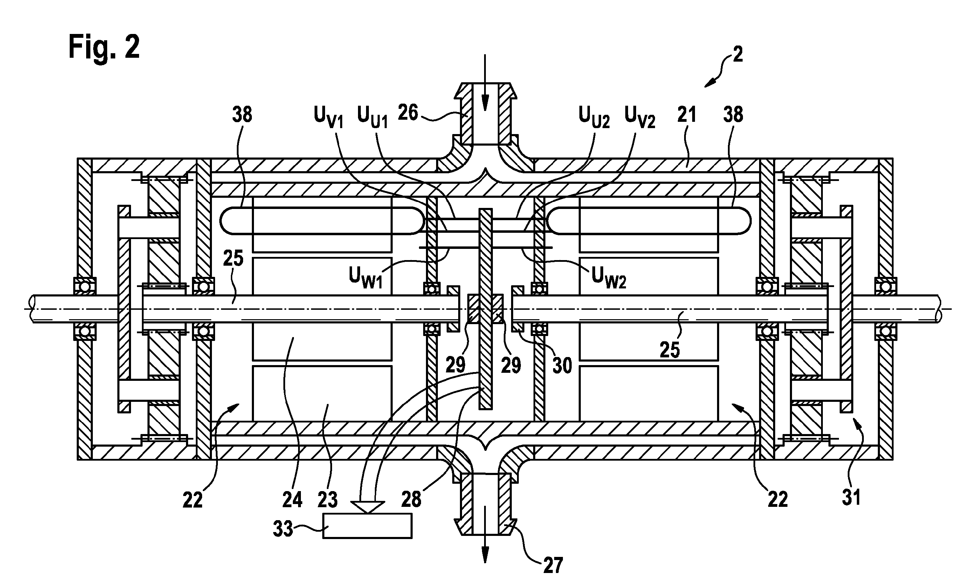

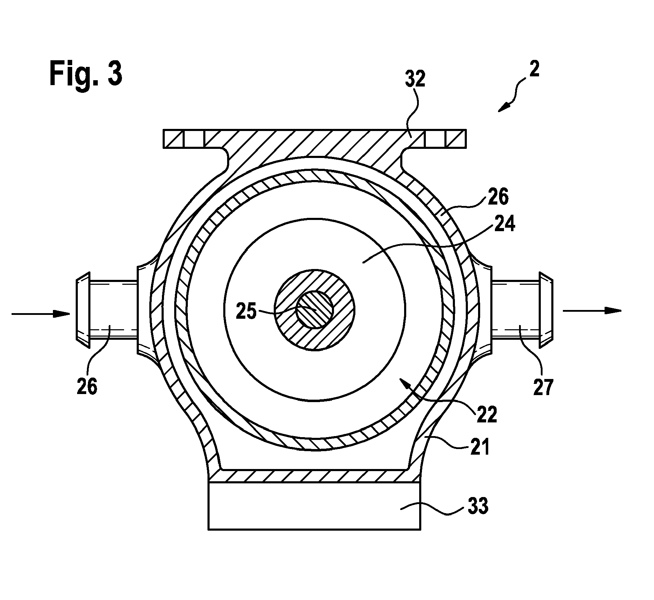

In den Figuren 2 und 3 ist eine erste Ausführungsform einer Antriebseinheit 2 in einer Schnittansicht in axialer Richtung bzw. in einer Schnittansicht senkrecht zur axialen Richtung detailliert dargestellt. Die Antriebseinheit 2 weist ein Gehäuse 21 auf, in dem zwei separat betriebene Elektromotoren 22 als Antriebsmotoren angeordnet sind. Das Gehäuse 21 ist im Wesentlichen zylinderförmig ausgebildet, wobei die Achsrichtung des Zylinders parallel oder koaxial zu den Kopplungswellen 3 verläuft. An der Mantelfläche des Gehäuses 21 ist ein Anschraubflansch 32 vorgesehen, um die Antriebseinheit 2 an dem Fahrzeug zu befestigen. An einer dem Anschraubflansch 32 gegenüber liegenden Seite ist eine Steuereinheit 33 zum Ansteuern der Elektromotoren 22 angeordnet.

Die Elektromotoren 22 können jeweils als Synchronmotor, Asynchronmotor oder dergleichen ausgebildet sein. Die Elektromotoren 22 sind als Innenläufermotoren ausgebildet und umfassen jeweils eine Statoranordnung 23, die eine Statorwicklung 38 trägt, und einen Rotor 24, der im Falle eines Synchronmotors mit Permanentmagneten zum Ausbilden von Rotorpolen versehen sein kann. Selbstverständlich können die Elektromotoren 22 auch als Außenläufermotoren ausgebildet sein.

Die Rotoren 24 sind an einer jeweiligen Abtriebswelle 25 angeordnet, wobei die Abtriebswellen 25 koaxial zueinander angeordnet, jedoch nicht miteinander verbunden sind.

Das Gehäuse 21 ist zumindest bereichsweise doppelwandig vorgesehen, um einen Kühlmittelkanal zu bilden, durch den Kühlmittel geführt wird. Vorzugsweise ist die Mantelfläche des Gehäuses 21 doppelwandig ausgeführt. Das Kühlmittel dient dazu, die im Inneren des Gehäuses angeordneten Elektromotoren 22 zu kühlen. Zum Zuführen des Kühlmittels ist ein Zuführungsstutzen 26 und zum Abführen ein Abführungsstutzen 27 vorgesehen, an die entsprechende Kühlmittelleitungen (nicht gezeigt) angeschlossen werden können. Als Kühlmittel wird vorzugsweise Wasser verwendet, das durch die entsprechende Antriebseinheit 2 gepumpt wird.

Zwischen den Elektromotoren 22 ist eine Leiterplatte 28 vorgesehen, die mit der an dem Gehäuse 21 angeordneten Steuereinheit 33 elektrisch verbunden ist. Die Leiterplatte 28 dient dazu, die elektrische Energie über (nicht gezeigte) Leiterbahnen an die Statorwicklungen 23 der Elektromotoren 22 anzulegen. Alternativ können die Zuleitungen zu den Statorwicklungen auch direkt durch Schweiß-, Schraub-, Crimp-, Steck- oder ähnliche Verbindungen direkt mit der Steuereinheit 33, insbesondere den Endstufen der Steuereinheit 33, verbunden sein.

Die Steuereinheit 33 übernimmt vorzugsweise die Ansteuerung beider Elektromotoren 22. Die Steuereinheit 33 stellt dazu für jeden der Elektromotoren 22 eine dreiphasige Ansteuerspannung bereit, durch die ein Spannungszeiger gebildet wird, dessen Betrag entsprechend einer Vorgabe durch das Steuergerät 7 einstellbar ist. Die Steuereinheit 33 übernimmt also die Aufgabe, eine von dem zentralen Steuergerät 7 bereitgestellte Ansteuergröße in eine konkrete Ansteuerung für die Elektromotoren 22 umzusetzen. Beispielsweise kann die Ansteuerung durch eine Pulsweitenmodulation erfolgen.

Vorzugsweise ist die Leiterplatte 28 zwischen den Elektromotoren 22, insbesondere zwischen den einander zugewandten Enden der Abtriebswellen 25, senkrecht zur Achsrichtung der Abtriebswellen 25 angeordnet. Die Leiterplatte 28 weist zwei Positionsdetektoren 29 auf, um die Rotorlagen (Lagewinkel) der beiden Rotoren 24 der Elektromotoren 22 zu bestimmen. Dazu kann das der Leiterplatte 28 zugewandte Ende der jeweiligen Abtriebswelle 25 mit einem oder mehreren Gebermagneten versehen sein, denen gegenüber der jeweilige Positionsdetektor 29 auf der Leiterplatte 28 angeordnet ist. Auf diese Weise können die Positionsdetektoren 29 Platz sparend zwischen den einander zugewandten Enden der Abtriebswellen 25 angeordnet werden, so dass diese auf den beiden Seiten der Leiterplatte 28 unmittelbar einander gegenüber liegend angeordnet sind. Die Leiterplatte 28 dient im Wesentlichen dazu, die Positionsdetektoren 29 zu halten und entsprechende Leitungsführungen zum Bereitstellen der Phasenspannungen für die Statorwicklungen 23 der Elektromotoren 22 bereitzustellen. Die Positionsdetektoren 29 können alternativ auch als digitale Sensoren mit anderen Wirkprinzipien, wie z.B. Lichtschranken-Signalgeber mit Loch oder Schlitzplatten, Metallfinger-Positionsdetektoren und dergleichen ausgebildet sein.

Mithilfe der durch die Positionsdetektoren 29 bestimmten Lage und der Ansteuergröße, die von dem Steuergerät 7 bereitgestellt wird, kann die Steuereinheit 28 den entsprechenden an den jeweiligen Elektromotor 22 anzulegenden Spannungszeiger bestimmen und für jeden der Elektromotoren 22 drei Phasenspannungen U_{U}, U_{V}, U_{W} generieren, die an die entsprechende Statorwicklung 23 angelegt werden.

Weiterhin sind die Abtriebswellen 25 der Elektromotoren 22 jeweils mit einer Getriebeeinheit 31 gekoppelt, die beispielsweise als Planetengetriebe ausgebildet sein kann, so dass das Antriebsmoment, das auf der Abtriebswelle 25 bereitgestellt wird, jeweils auf die koaxial zur jeweiligen Abtriebswelle 25 angeordnete Kopplungswelle 3 übertragen wird. Die Kopplungswelle 3 verbindet, wie zuvor beschrieben, die Antriebseinheit 2 mit dem jeweiligen Antriebsrad 4.

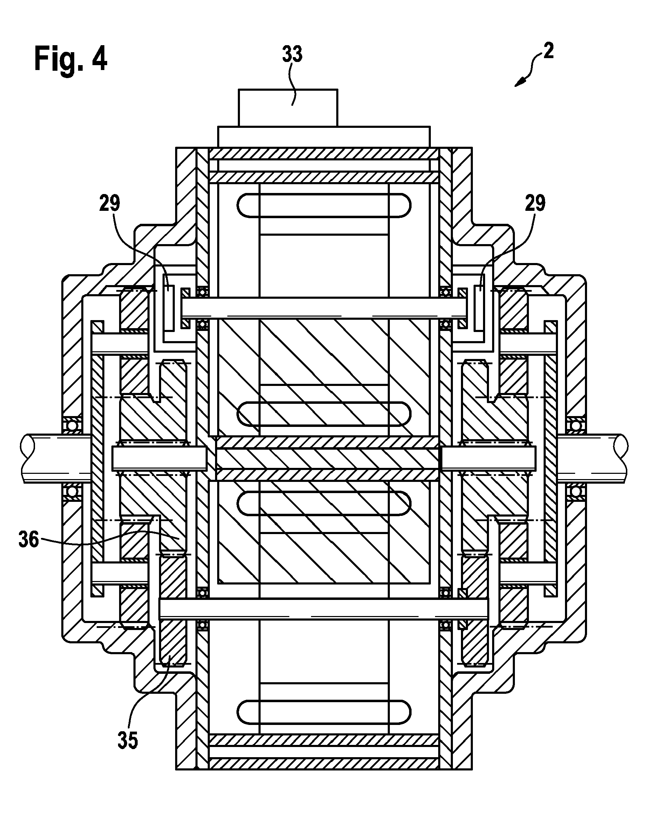

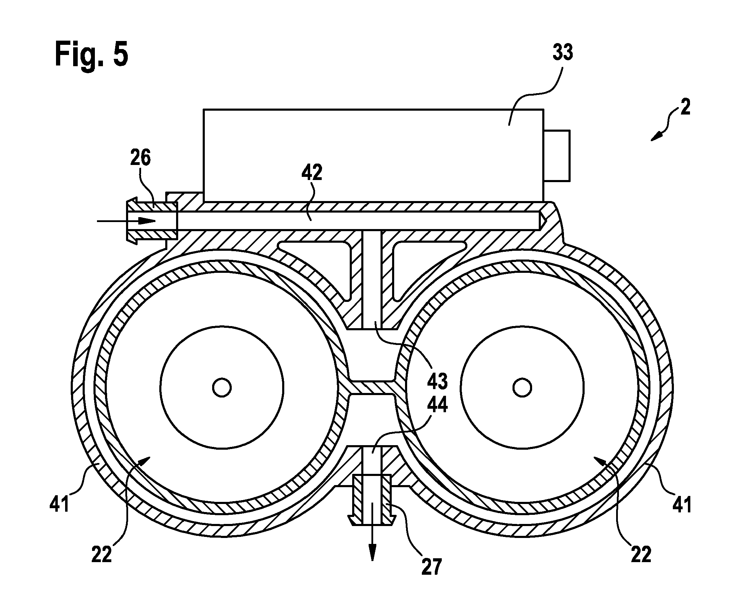

In den Figuren 4 und 5 ist eine weitere Ausführungsform einer Antriebseinheit 2 dargestellt. Die Antriebseinheit 2 gemäß der weiteren Ausführungsform umfasst, wie die erste Ausführungsform, ein Gehäuse 21 mit einem bereichsweise ausgebildeten Kühlmittelkanal, wobei Kühlmittel über den Zuführungsstutzen 26 zugeführt und über den Abführungsstutzen 27 abgeführt wird.

Weiterhin sind zwei Elektromotoren 22 angeordnet, deren jeweiligen Abtriebswellen 25 über ein entsprechendes Planetengetriebe 31 mit der Kopplungswelle 3 verbunden sind.

Im Unterschied zur Ausführungsform der Figuren 2 und 3 sind die Elektromotoren 22 so angeordnet, dass deren Abtriebswellen 25 parallel zueinander verlaufen. Die Abtriebswellen 25 sind also bezüglich der Achse der Kopplungswelle 3 versetzt und das durch die Elektromotoren 22 bereitgestellte Antriebsmoment wird über ein Zahnrad oder ein Ritzel 35 auf ein entsprechendes Getriebeeingangszahnrad 36 des Planetengetriebes 31 übertragen. Ausgangsseitig ist das Getriebe 31 jeweils mit der Kopplungswelle 3 verbunden.

An einem dem jeweils zugeordneten Getriebe 31 gegenüber liegenden Ende der Abtriebswelle 25 ist der Positionsdetektor 29 für die Positionsbestimmung der Abtriebswelle 25 des jeweiligen zugeordneten Elektromotors 22 angeordnet. Jeder der Positionsdetektoren 29 ist elektrisch mit der Steuereinheit 33 verbunden, um eine Information über die Rotorposition an die Steuereinheit 33 zu übermitteln. Die Steuereinheit 33 stellt, wie oben beschrieben, die Phasenspannungen für die jeweiligen Elektromotoren 22 bereit.

Wie aus Fig. 5 ersichtlich, ist das Gehäuse 21 der Antriebseinheit 2 in Form von zwei an der Mantelfläche miteinander verbundenen zylindrischen Teilgehäusen 41 zusammengesetzt. Die Mantelflächen der zylindrischen Teilgehäuse 41 sind im Wesentlichen doppelwandig ausgeführt. Die Kühlmittelzuführung 26 ist über einen Kühlmittelkanal 42 mit einem Einlassbereich 43 verbunden, in dem die zylindrischen Teilgehäuse 41 aneinander angrenzen. Der Kühlmittelkanal 42 ist vorzugsweise zwischen dem Gehäuse 21 und der Steuereinheit 33 angeordnet, um eine etwaige Wärmeübertragung von den Elektromotoren 22 zu der Steuereinheit 33 zu reduzieren.

Dem Einlassbereich 43 gegenüber liegend, bezüglich des Bereichs, in dem die Teilgehäuse 41 aneinander angrenzen, ist ein Auslassbereich 44 vorgesehen, der mit der Kühlmittelabführung 27 entweder direkt oder über eine (nicht gezeigte) Abführungsleitung verbunden ist. Zwischen dem Einlassbereich 43 und dem Auslassbereich 44 sind die Kühlmittelkanäle der doppelwandigen Teilgehäuse 41 so voneinander abgetrennt, dass Kühlmittel nicht direkt von dem Einlassbereich 43 zu dem Auslassbereich 44 fließen kann, ohne durch die Kühlmittelkanäle des Bereichs der Mantelfläche eines der Teilgehäuse 41 zu fließen, an dem die Mantelfläche nicht an dem jeweils anderen Teilgehäuse 41 anliegt.

## Patentansprüche

1. Antriebseinheit (2) für ein Antriebssystem (1) eines Kraftfahrzeugs, umfassend:
- ein Gehäuse (21) zur Aufnahme von mehreren, insbesondere zwei Antriebsmotoren (22);
- zwei an gegenüber liegenden Seiten des Gehäuses (21) vorgesehene Kopplungswellen (3), die koaxial zueinander angeordnet sind; und
- eine Steuereinheit (33) zum Ansteuern der Antriebsmotoren (22), die an einer Außenseite des Gehäuses (21) angeordnet ist.

2. Antriebseinheit (2) nach Anspruch 1, wobei das Gehäuse (21) zumindest bereichsweise mit einem oder mehreren Kühlmittelkanälen zum Transport eines Kühlmittels versehen ist, wozu insbesondere das Gehäuse (219 bereichsweise doppelwandig ausgeführt ist.

3. Antriebseinheit (2) nach Anspruch 2, wobei ein weiterer Kühlmittelkanal zwischen der Steuereinheit (33) und dem Gehäuse (21) angeordnet ist.

4. Antriebseinheit (2) nach einem der Ansprüche 1 bis 3, wobei das Gehäuse (21) zylindrisch ausgebildet ist und Abtriebswellen (25) der Antriebsmotoren (22) koaxial zu den Kopplungswellen (3) und weiterhin koaxial oder parallel zur Achsrichtung des zylindrischen Gehäuses (21) ausgerichtet sind.

5. Antriebseinheit (2) nach Anspruch 4, wobei zwischen den Antriebsmotoren (22) eine Leiterplatte zur Zuführung elektrischer Energie zu Wicklungen, insbesondere zu einer Statoranordnung (23) der Antriebsmotoren (22), angeordnet ist.

6. Antriebseinheit (2) nach Anspruch 5, wobei die Leiterplatte zwei Positionsdetektoren (29) aufweist, die einander gegenüber liegend auf zwei Seiten der Leiterplatte (28) zwischen einander zugewandten Enden der Abtriebswellen (25) angeordnet sind.

7. Antriebseinheit (2) nach Anspruch 5 oder 6, wobei jedem Antriebsmotor (22) ein Getriebe (31), insbesondere ein Planetengetriebe, zugeordnet ist, das jeweils an einem der Leiterplatte (28) gegenüber liegenden Ende der Abtriebswelle (25) angeordnet ist.

8. Antriebseinheit (2) nach einem der Ansprüche 1 bis 3, wobei das Gehäuse (21) zwei zylindrische Teilgehäuse aufweist, die jeweils in einem Bereich ihrer Mantelflächen miteinander verbunden sind, wobei Abtriebswellen (25) der Antriebsmotoren (22) parallel zur Achsrichtung der zylindrischen Gehäuse (21) ausgerichtet sind.

9. Antriebseinheit (2) nach Anspruch 8, wobei jedem Antriebsmotor (22) ein Getriebe (31), insbesondere ein Planetengetriebe, zugeordnet ist, das jeweils an einem Stirnende des entsprechenden Teilgehäuses angeordnet ist.

10. Antriebseinheit (2) nach Anspruch 9 , wobei jedem Antriebsmotor (22) ein Positionsdetektor (29) zugeordnet ist, der auf einem dem Getriebe (31) gegenüber liegendem Ende der entsprechenden Abtriebswelle (25) angeordnet ist.

11. Antriebssystem (1) für ein Kraftfahrzeug, umfassend:
- mehrere an einer Achse angeordnete Antriebsräder (4);
- eine Antriebseinheit (2) nach einem der vorangehenden Ansprüche; und
- Kopplungswellen (3) zum Verbinden der Antriebseinheit (2) mit den mehreren Antriebsrädern (4).

12. Antriebssystem (1) nach Anspruch 11, wobei die Antriebseinheit (2) mittig zwischen den Antriebsrädern (4) angeordnet ist.
